# EUROPEAN PATENT SPECIFICATION

(11) **EP 3 109 741 B1**
(45) Date of publication and mention of the grant of the patent: **12.12.2018**
(21) Application number: 16175844.6
(22) Date of filing: 23.06.2016
(51) Int. Cl.: G06F 3/041, G06F 3/0488

(54) **METHOD AND DEVICE FOR DETERMINING CHARACTER**
VERFAHREN UND VORRICHTUNG ZUR BESTIMMUNG EINES ZEICHENS
PROCÉDÉ ET DISPOSITIF DE DÉTERMINATION DE PERSONNAGE

(30) Priority: 26.06.2015 CN 201510364420
(43) Date of publication of application: 28.12.2016
(73) Proprietor: Xiaomi Inc., Beijing 100085 (CN)
(72) Inventor: ZHAO, Fei, BEIJING 100085 (CN)
(74) Representative: Delumeau, François Guy

(56) References cited:
- WO-A1-2012/086133
- JP-A- 2001 175 375
- US-A1- 2010 228 539

## Description

### TECHNICAL FIELD

The present disclosure generally relates to the technical field of communication, and more particularly, to a method and a device for determining a character.

### BACKGROUND

When a user is entering characters on a terminal with a touch screen such as a mobile phone, in addition to the manual entering, the user may enter characters through a soft keyboard in related arts. During character entering, one of the biggest problems is that the user cannot accurately enter the selected character on the soft keyboard, and the character returned by the keyboard is usually a character around the target character, and thus the user has to try to enter the character again.

The area of each key may be increased by enlarging the screen of the terminal to increase input accuracy, and however the screen size of the terminal is limited after all and different persons have different finger sizes, and thus the above problem cannot be fundamentally solved. Documents JP 2001 175375 A and WO 2012/086133 A1 disclose portable information terminals capable of clearly displaying a software keyboard and preventing data from being erroneously inputted by a user without impairing portability.

### SUMMARY

The present disclosure provides a method and a device for determining a character in order to solve the problem in related arts that a user cannot accurately select a target character when entering characters on a soft keyboard.

According to a first aspect of embodiments of the present disclosure, there is provided a method for determining a character. The method is applied in a terminal with a touch screen and comprises steps of:
when detecting information of a first touch point on a soft keyboard, judging whether it is needed to provide a plurality of candidate characters;
if it is needed to provide a plurality of candidate characters, outputting the plurality of candidate characters, wherein a first area currently occupied by each of the candidate characters is larger than a second area occupied by each of the characters on the soft keyboard; and
determining a target character among the plurality of candidate characters.

According to the invention, the step of judging whether it is needed to provide a plurality of candidate characters comprises steps of:
when detecting the information of the first touch point on the soft keyboard, determining first touch point coordinates of a position where the first touch point is located;
determining a first candidate character according to the first touch point coordinates, wherein the first candidate character represents a soft key which covers a first region that includes the first touch point coordinates; and
judging whether a first distance between first center point coordinates of a center point of the first region and the first touch point coordinates exceeds a preset threshold, and if the first distance exceeds the preset threshold, determining that it is needed to provide the plurality of candidate characters.

In a particular embodiment, the method further comprises a step of:
if the first distance does not exceed the preset threshold, determining the first candidate character as the target character.

In a particular embodiment, the step of outputting the plurality of candidate characters comprises a step of:
outputting the plurality of candidate characters on a provided sub keyboard.

In a particular embodiment, the step of outputting the plurality of candidate characters on a provided sub keyboard comprises steps of:
determining at least one second candidate character based on at least one second distance in an order from small to large, wherein the second distance is a distance between second center point coordinates of a center point of a second region where each of the at least one second candidate character is located and the first touch point coordinates; and
outputting the first candidate character and the at least one second candidate character on the provided sub keyboard.

In a particular embodiment, the method further comprises a step of:
while outputting the first candidate character and the at least one second candidate character on the provided sub keyboard, increasing a first brightness value of the first candidate character.

In a particular embodiment, the step of determining a target character among the plurality of candidate characters comprises steps of:
when detecting information of a second touch point on the plurality of candidate characters, determining second touch point coordinates of a position where the second touch point is located; and
determining the target character according to the second touch point coordinates, wherein the target character is a candidate character, among the plurality of candidate characters, that covers a region which includes the second touch point coordinates.

In a particular embodiment, determining a target character among the plurality of candidate characters comprises steps of:
when detecting information of consecutive touch points, determining, among the plurality of candidate characters, third touch point coordinates of a position where the last touch point in the consecutive touch points is located; and
determining the target character according to the third touch point coordinates, wherein the target character is a candidate character, among the plurality of candidate characters, that covers a region which includes the third touch point coordinates.

In a particular embodiment, the method further comprises a step of:
among the plurality of candidate characters, increasing a second brightness value of a character corresponding to information of a current touch point in the consecutive touch points.

In a particular embodiment, after the step of determining the target character among the plurality of candidate characters, the method further comprises a step of:
selecting the target character on the soft keyboard.

According to a second aspect of embodiments of the present disclosure, there is provided a device for determining a character. The device is applied in a terminal with a touch screen and comprises:
a judging unit configured to, when information of a first touch point is detected on a soft keyboard, judge whether it is needed to provide a plurality of candidate characters;
an output unit configured to, if it is needed to provide a plurality of candidate characters, output the plurality of candidate characters, wherein a first area currently occupied by each of the candidate characters is larger than a second area occupied by each of the characters on the soft keyboard; and
a first determining unit configured to determine a target character among the plurality of candidate characters.

According to the invention, the judging unit comprises:
a first determining subunit configured to, when the information of the first touch point is detected on the soft keyboard, determine first touch point coordinates of a position where the first touch point is located;
a second determining subunit configured to determine a first candidate character according to the first touch point coordinates, wherein the first candidate character represents a soft key which covers a first region that includes the first touch point coordinates; and
a judging subunit configured to judge whether a first distance between first center point coordinates of a center point of the first region and the first touch point coordinates exceeds a preset threshold, and if the first distance exceeds the preset threshold, determine that it is needed to provide the plurality of candidate characters.

In a particular embodiment, the device further comprises:
a second determining unit configured to, if the first distance does not exceed the preset threshold, determine the first candidate character as the target character.

In a particular embodiment, the output unit comprises:
an output subunit configured to output the plurality of candidate characters on a provided sub keyboard.

In a particular embodiment, the output subunit includes:
a determining module configured to determine at least one second candidate character based on at least one second distance in an order from small to large, wherein the second distance refers to a distance between second center point coordinates of a center point of a second region where each of the at least one second candidate character is located and the first touch point coordinates; and
an output module configured to output the first candidate character and the at least one second candidate character on the provided sub keyboard.

In a particular embodiment, the device further comprises:
a first brightness-increase unit configured to, while the first candidate character and the at least one second candidate character are output on the provided sub keyboard, increase a first brightness value of the first candidate character.

In a particular embodiment, the first determining unit comprises:
a third determining subunit configured to, when information of a second touch point is detected on the plurality of candidate characters, determine second touch point coordinates of a position where the second touch point is located; and
a fourth determining subunit configured to determine the target character according to the second touch point coordinates, wherein the target character is a candidate character, among the plurality of candidate characters, that covers a region which includes the second touch point coordinates.

In a particular embodiment, the first determining unit comprises:
a fifth determining subunit configured to, when information of consecutive touch points is detected, determine among the plurality of candidate characters third touch point coordinates of a position where the last touch point in the consecutive touch points is located; and
a sixth determining subunit configured to determine the target character according to the third touch point coordinates, wherein the target character is a candidate character, among the plurality of candidate characters, that covers a region which includes the third touch point coordinates.

In a particular embodiment, the device further comprises:
a second brightness-increase unit configured to, among the plurality of candidate characters, increase a second brightness value of a character corresponding to information of a current touch point in the consecutive touch points.

In a particular embodiment, the device further comprises:
a selecting unit configured to select the target character on the soft keyboard.

According to a third aspect of embodiments of the present disclosure, there is provided a device for determining a character, comprising:
a processor; and
a memory for storing instructions executable by the processor;
wherein the processor is configured to perform:
when detecting information of a first touch point on a soft keyboard, judging whether it is needed to provide a plurality of candidate characters;
if it is needed to provide a plurality of candidate characters, outputting the plurality of candidate characters, wherein a first area currently occupied by each of the candidate characters is larger than a second area occupied by each of the characters on the soft keyboard; and
determining a target character among the plurality of candidate characters.

The advantages and features of the devices according to the embodiments of the present disclosure are the same with those of the above described method and will not be repeated here.

Alternatively, the steps of the method for determining a character are determined by computer program instructions.

Consequently, according to a fourth aspect, the invention is also directed to a computer program for executing the steps of the method for determining a character as described above when this program is executed by a computer.

This program can use any programming language and take the form of source code, object code or a code intermediate between source code and object code, such as a partially compiled form, or any other desirable form.

The invention is also directed to a computer-readable information medium containing instructions of a computer program as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

The technical solutions provided by embodiments of the present disclosure may have the following advantageous effects:
In the present disclosure, when information of a first touch point is detected on a soft keyboard, whether it is needed to provide a plurality of candidate characters is judged according to the information of the first touch point; when it is needed to provide a plurality of candidate characters, the plurality of candidate characters with increased areas are output. Thus, it is easy for a user to accurately select a target character among the plurality of candidate characters.

In the present disclosure, the terminal judges whether a first distance between first center point coordinates of a center point of the first region where a first candidate character is located and the first touch point coordinates exceeds a preset threshold, and thus the terminal can intelligently judge whether to provide the plurality of candidate characters. What the user needs to do is only confirming the target character among the provided plurality of candidate characters with increased areas. Thus, user experience is improved.

In the present disclosure, the plurality of candidate characters output on a sub keyboard include a first candidate character and at least one second candidate character. The first touch point coordinates are within a first region where the first candidate character is located, that is, the first candidate character is most likely to serve as the target character. Thus, the first candidate character may be highlighted by increasing the brightness value, and thereby user experience is improved. In addition to the first candidate character, the present disclosure also provides at least one character in nearest proximities with the first touch point coordinates as the second candidate characters. Thus, the accuracy for determining the target character is improved.

In the present disclosure, after the plurality of candidate characters are provided, the target character may be determined in various manners. The target character may be determined according to information of a second touch point detected on the candidate characters with increased areas. Or, when information of consecutive touch points is detected, the target character is determined according to the information of the last touch point in the consecutive touch points. In this way, the user can accurately select the target character among the candidate characters, and thereby user experience is improved.

In the present disclosure, while providing the plurality of candidate characters, a character corresponding to a current touch point in the consecutive touch points may be highlighted by increasing the brightness value. Thus, the user may more accurately judge whether the character is the target character the user wants until the user accurately selects the target character. In this way, the present disclosure may improve user experience.

The invention is defined by the independent claims. Further aspects of the invention are outlined in the dependent claims. Embodiments which do not fall within the scope of the claims do not describe part of the present invention.

### BRIEF DESCRIPTION OF THE DRAWINGS

The accompanying drawings, which are incorporated in and constitute a part of this specification, illustrate embodiments consistent with the present disclosure and, together with the description, serve to explain the principles of the present disclosure.
Fig. 1 is a flowchart showing a method for determining a character according to an exemplary embodiment of the present disclosure.
Fig. 2A is a flowchart showing another method for determining a character according to an exemplary embodiment of the present disclosure.
Fig. 2B is a diagram showing an interface for presenting characters on a soft keyboard according to an exemplary embodiment of the present disclosure.
Fig. 2C is a diagram showing a presentation interface when a character on a soft keyboard is tapped according to an exemplary embodiment of the present disclosure.
Fig. 2D is a diagram showing an interface when candidate characters are presented on a sub keyboard over a soft keyboard according to an exemplary embodiment of the present disclosure.
Fig. 2E is a diagram showing another interface when candidate characters are presented on a sub keyboard over a soft keyboard according to an exemplary embodiment of the present disclosure.
Fig. 2F is a diagram showing another interface when candidate characters are presented on a sub keyboard over a soft keyboard according to an exemplary embodiment of the present disclosure.
Fig. 3 is a flowchart showing another method for determining a character according to an exemplary embodiment of the present disclosure.
Fig. 4 is a flowchart showing another method for determining a character according to an exemplary embodiment of the present disclosure.
Fig. 5 is a flowchart showing another method for determining a character according to an exemplary embodiment of the present disclosure.
Fig. 6 is a block diagram showing a device for determining a character according to an exemplary embodiment of the present disclosure.
Fig. 7 is a block diagram showing another device for determining a character according to an exemplary embodiment of the present disclosure.
Fig. 8 is a block diagram showing another device for determining a character according to an exemplary embodiment of the present disclosure.
Fig. 9 is a block diagram showing another device for determining a character according to an exemplary embodiment of the present disclosure.
Fig. 10 is a block diagram showing another device for determining a character according to an exemplary embodiment of the present disclosure.
Fig. 11 is a block diagram showing another device for determining a character according to an exemplary embodiment of the present disclosure.
Fig. 12 is a block diagram showing another device for determining a character according to an exemplary embodiment of the present disclosure.
Fig. 13 is a block diagram showing another device for determining a character according to an exemplary embodiment of the present disclosure.
Fig. 14 is a block diagram showing another device for determining a character according to an exemplary embodiment of the present disclosure.
Fig. 15 is a block diagram showing another device for determining a character according to an exemplary embodiment of the present disclosure.
Fig. 16 is a block diagram showing a structure applied in the device for determining a character according to an exemplary embodiment of the present disclosure.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the present disclosure. Instead, they are merely examples of devices and methods consistent with aspects related to the present disclosure as recited in the appended claims.

The terminologies used herein are only for describing particular embodiments but not for limiting the present disclosure. The singular form words "a", "the", and "said" used in the present disclosure and append claims are intended to include plural form, unless otherwise clearly stated. Also, it shall be appreciated that the terminology "and/or" used herein refers to any or all combinations of one or more listed related items.

It shall be appreciated that although the present disclosure uses terminologies "first", "second", and "third" and the like to describe various information, the information shall not be limited by these terminologies. Using these terminologies is only for distinguishing information of the same type. For example, without departing from the scope of the present disclosure, the first information may be referred to as the second information, and similarly, the second information may be referred to as the first information. Depending on the context, the terminology "if" used herein may be interpreted as "when" or "in response to determining that..."

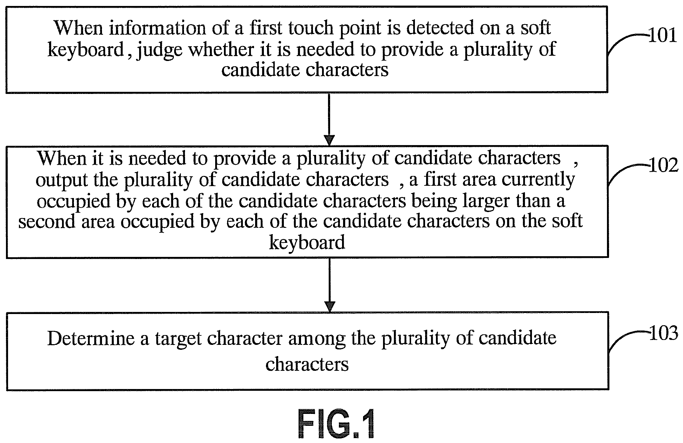

Fig. 1 is a flowchart showing a method for determining a character according to an exemplary embodiment. The method is applied in a terminal with a touch screen and includes the following steps.

In step 101, when information of a first touch point is detected on a soft keyboard, whether it is needed to provide a plurality of candidate characters is judged.

The terminal involved in embodiments of the present disclosure may be various smart terminals through a touch screen of which touch operations may be performed, for example, a smart phone, a tablet computer, a Personal Digital Assistant (PDA) and the like. Alternatively, the terminal may be a terminal having a relatively small touch screen.

In this step, when a user of the terminal taps a soft keyboard through the touch screen, the terminal can detect information of a first touch point. At this time, related technologies may be used to determine first touch point coordinates of a position where the first touch point is located. The first candidate character represents a soft key (of the soft keyboard) which covers a region that includes the first touch point coordinates.

Optionally, in an embodiment of the present disclosure, whether a first distance between first center point coordinates of a center point of the first region and the first touch point coordinates exceeds a preset threshold is judged to decide whether to provide a plurality of candidate characters.

When the first distance does not exceed the preset threshold, it can be determined that the first touch point coordinates are located relatively centrally in the first region, and thus it can be determined that the target character the user wants is the first candidate character, and the first candidate character can be directly returned on the soft keyboard.

When the first distance exceeds the preset threshold, it can be determined that the first touch point coordinates are at an edge position of the first region. Because the area occupied by each of the characters on the soft keyboard is relatively small, if the first character is directly determined as the target character, this may cause the user to reselect characters. In an embodiment of the present disclosure, under such situation, it is determined that a plurality of candidate characters need to be provided so as to make the user more accurately select the target character.

In step 102, when it is needed to provide a plurality of candidate characters, the plurality of candidate characters are output. A first area currently occupied by each of the candidate characters is larger than a second area occupied by each of the characters on the soft keyboard.

In this step, a sub keyboard may be provided, and the plurality of candidate characters may be output on the sub keyboard. The sub keyboard may be located in any direction with respect to the soft keyboard, for example, the sub keyboard may be located in the up-left, the bottom-left, the up-right, or the bottom-right and the like of the soft keyboard. Meanwhile, the sub keyboard may cover a part of the region covered by the soft keyboard.

The plurality of candidate characters output on the sub keyboard include a first candidate character and at least one second candidate character.

The first candidate character is a character determined according to the information of the first touch point, and is most likely to serve as the target character the user wants. Thus, in an embodiment of the present disclosure, a first brightness value of the first candidate character may be increased to highlight the first candidate character, and thereby user experience is improved.

In this step, while the first candidate character is output, at least one second candidate character may be output according to the first touch point coordinates. The at least one second candidate character may be one or more characters determined according to at least one second distance in an order from small to large, wherein the second distance refers to a distance between the first touch point coordinates and a center point of a second region covered by each soft key that corresponds to the at least one second candidate character. Thus, the target character can be determined more accurately. Optionally, three second candidate characters may be output.

In an embodiment of the present disclosure, because the number of the candidate characters output on the sub keyboard is relatively small, the first area currently occupied by each of the candidate characters (i.e., the first area occupied by each of the candidate characters on the sub keyboard) may be larger than the second area occupied by each of the characters on the soft keyboard. Thus, the user may more accurately determine the target character on the sub keyboard where the size of each candidate characters is enlarged, and thereby user experience is improved.

In step 103, the target character is determined among the plurality of candidate characters.

In this step, one optional implementation is that, when information of a second touch point is detected on the plurality of candidate characters, second touch point coordinates of a position where the second touch point is located are firstly determined, and a candidate character (on the sub keyboard) which covers a region including the second touch point coordinates is determined as the target character.

Another optional implementation is that, when information of consecutive touch points is detected, for example, the information of consecutive touch points generated when a finger or a stylus of the user of the terminal always contacts the touch screen and slides thereon, third touch point coordinates of a position where the last touch point in the consecutive touch points is located are determined among the plurality of candidate characters. At this time, the information of the last touch point corresponds to the information of the touch point when the user lifts the finger or stylus. A candidate character (on the sub keyboard) which covers a region including the third touch point coordinates is determined as the target character.

Optionally, among the plurality of candidate characters, a second brightness value of a character corresponding to information of a current touch point in the consecutive touch points may be increased to make the user more accurately determine whether the currently highlighted character is the target character the user wants, and thereby user experience is improved.

After the target character is determined by the above steps, optionally, the method further includes:
selecting the target character on the soft keyboard.

It can be seen from the above embodiments that, when the information of the first touch point is detected on the soft keyboard, the terminal intelligently judges, according to the information of the first touch point, whether the position where the first touch point is located is at a relatively central region of the first candidate character so as to determine whether to provide a plurality of candidate characters. When it is needed to provide the plurality of candidate characters, the plurality of candidate characters are output on a provided sub keyboard on which the area of each of the candidate characters is increased. Thus, it is easy for the user to accurately select the target character among the plurality of candidate characters, and thereby user experience is improved.

By the above procedures, the present disclosure may avoid the problem that, when the user enters characters on the soft keyboard of the touch screen of the terminal, the user cannot accurately select the target character and thereby has to return to the soft keyboard to enter characters again.

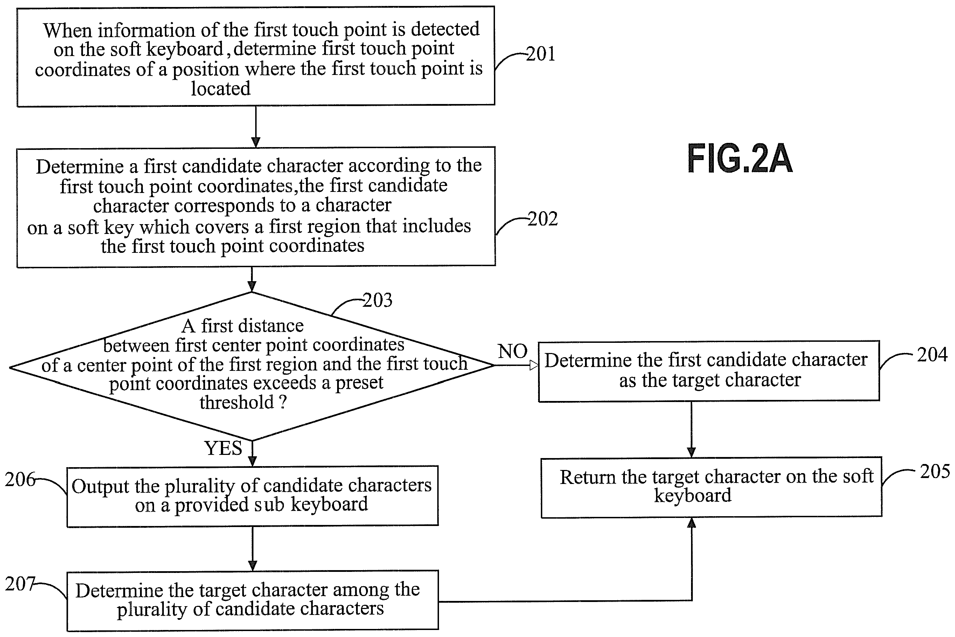

Fig. 2A is a flowchart showing another method for determining a character according to an exemplary embodiment. The method may be applied in a terminal with a touch screen and may include the following steps.

In step 201, when information of a first touch point is detected on a soft keyboard, first touch point coordinates of a position where the first touch point is located are determined.

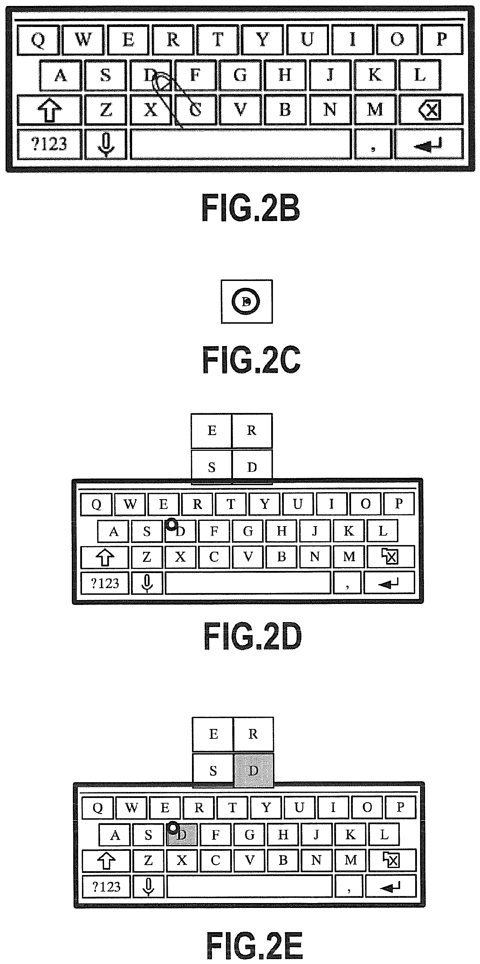

In this step, when a user of the terminal taps a certain character on the soft keyboard via his/her finger or stylus, as shown in Fig. 2B, the terminal may detect the information of the first touch point on the soft keyboard and may determine the first touch point coordinates through technologies in related arts.

In step 202, a first candidate character is determined according to the first touch point coordinates. The first candidate character represents a soft key which covers a first region that includes the first touch point coordinates.

In this step, a character (i.e. on a soft key of the soft keyboard) that covers a region including the first touch point coordinates is determined as the first candidate character. As shown in Fig. 2B, the first touch point coordinates are included in the region of the character "D" on the soft keyboard, the character "D" is thus determined as the first candidate character.

In step 203, whether a first distance between first center point coordinates of a center point of the first region and the first touch point coordinates exceeds a preset threshold is judged. If the first distance does not exceed the preset threshold, step 204 is performed; otherwise, step 206 is performed.

In this step, by judging whether the first distance exceeds the preset threshold, whether the first touch point coordinates are located relatively centrally in the first region is determined. As shown in Fig. 2C, the above judging corresponds to judging whether the first touch point coordinates are located in a region with the center point of the region where the character "D" is located as the circle center and the preset threshold as the radius. If the first touch point coordinates are within the region, it is indicated that the first touch point coordinates are located relatively centrally in the first region, and at this time step 204 may be performed; otherwise, step 206 is performed.

In step 204, the first candidate character is determined as the target character.

If the first touch point coordinates are located relatively centrally in the first region, the first candidate character can be determined as the target character the user wants.

In step 205, the target character is selected on the soft keyboard.

In step 206, the plurality of candidate characters are output on a provided sub keyboard.

In this step, when the first distance exceeds the preset threshold, it is indicated that the first touch point coordinates are located at an edge position of the first region, and at this time a sub keyboard can be provided, and the candidate characters can be output on the sub keyboard. The sub keyboard may be located in any direction with respect to the soft keyboard, for example, the sub keyboard may be located in the up-left, the bottom-left, the up-right, or the bottom-right and the like of the soft keyboard. Meanwhile, the sub keyboard may cover a part of the region of the soft keyboard.

The output plurality of candidate characters include the first candidate character and at least one second candidate character. The at least one second candidate character refers to at least one character in nearest proximities with the first touch point coordinates. In an embodiment of the present disclosure, at least one second distance between second center point coordinates of a center point of a second region where each of the at least one second candidate character is located and the first touch point coordinates is calculated, and the at least one second candidate character may be selected according to at least one second distance in an order from small to large. Optionally, three characters may be sequentially selected as the second candidate characters.

Because the number of the characters provided on the sub keyboard is relatively small, the first area currently occupied by each of the candidate characters on the sub keyboard may be larger than the second area occupied by each of the characters on the soft keyboard.

As shown in Fig. 2D, when the first touch point coordinates are at an edge position of the character "D", for example, at the up-left position, three second candidate characters in nearest proximities with the first touch point coordinates are provided on the sub keyboard in addition to the first candidate character "D", i.e., the characters "S", "E" and "R" at the up-left position with respect to the character "D" on the soft keyboard.

In this step, the first candidate character is a character corresponding to the information of the first touch point, and is also most likely to serve as the target character. Thus, in an embodiment of the present disclosure, while a plurality of candidate characters are output on the sub keyboard, the first brightness value of the first candidate character may be increased to highlight the first candidate character, and thereby user experience is improved, as shown in Fig. 2E.

In step 207, the target character is determined among the plurality of candidate characters. In the step, the target character may be determined by the following approaches:
Approach One: When information of a second touch point is detected on the plurality of candidate characters, second touch point coordinates of a position where the second touch point is located are firstly determined, and a candidate character (on the sub keyboard) that covers a region which includes the second touch point coordinates is determined as the target character.

That is to say, the user of the terminal may directly tap the target character on the sub keyboard. Because the area occupied by each character is increased on the sub keyboard, the user can more accurately determine the target character, and thereby user experience is improved.

Approach Two: When information of consecutive touch points is detected, third touch point coordinates of a position where the last touch point in the consecutive touch points is located are determined among the plurality of candidate characters, and a candidate character (on the sub keyboard) that covers a region which includes the third touch point coordinates is determined as the target character.

When information of consecutive touch points is detected, for example, the information of consecutive touch points generated when a finger or a stylus of the user of the terminal always contacts the touch screen and slides thereon, the information of the last touch point corresponds to the information of the touch point when the user lifts the finger or stylus, and a character corresponding to the information of the last touch point is determined as the target character.

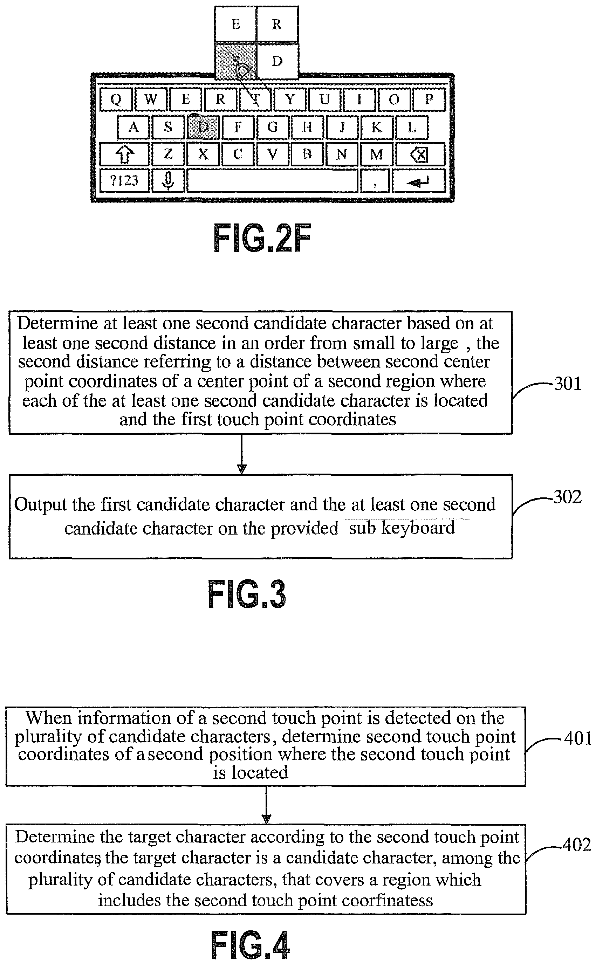

Optionally, a second brightness value of a character corresponding to information of a current touch point in the consecutive touch points may be increased to make the user more accurately determine whether the currently highlighted character is the target character the user wants, and thereby user experience is improved. As shown in Fig. 2F, when user's finger always contacts the touch screen and slides to the character "S" on the sub keyboard, the brightness value of the character "S" is increased.

After the target character is determined among the plurality of candidate characters, return back to perform step 205.

As apparent from the above embodiments, in the present disclosure, when information of a first touch point is detected on a soft keyboard, the terminal judges whether a first distance between first center point coordinates of a center point of the first region where a first candidate character is located and the first touch point coordinates exceeds a preset threshold, and thus the terminal can intelligently judge whether to provide the plurality of candidate characters. When it is needed to provide a plurality of candidate characters, the plurality of candidate characters with increased areas are output. In the embodiments of the present disclosure, the output candidate characters include a first candidate character and at least one second candidate character in nearest proximities with the first touch point coordinates, and thus it is easy for the user to accurately select the target character among the output plurality of candidate characters. In the present disclosure, what the user needs to do is only confirming the target character among the provided plurality of candidate characters with increased areas. Thus, user experience is improved.

Fig. 3 is a flowchart showing another method for determining a character according to an exemplary embodiment. The method is applied in a terminal with a touch screen. On the basis of the embodiment as shown in Fig. 2A, the embodiment in Fig. 3 describes in detail the procedure for outputting a plurality of candidate characters on a provided sub keyboard, and may include the following steps.

In step 301, at least one second candidate character is determined based on at least one second distance in an order from small to large. The second distance refers to a distance between second center point coordinates of a center point of a second region where each of the at least one second candidate character is located and the first touch point coordinates.

In this step, at least one second distance between second center point coordinates of a center point of a second region where each of the at least one second candidate character is located and the first touch point coordinates is calculated, and the at least one second candidate character may be selected according to at least one second distance in an order from small to large. Optionally, three characters may be sequentially selected as the second candidate characters.

In step 302, the first candidate character and the at least one second candidate character are output on the provided sub keyboard.

Because the number of the characters provided on the sub keyboard is relatively small, the first area currently occupied by each of the candidate characters on the sub keyboard may be larger than the second area occupied by each of the characters on the soft keyboard.

Fig. 4 is a flowchart showing another method for determining a character according to an exemplary embodiment. The method is applied in a terminal with a touch screen. On the basis of the embodiment as shown in Fig. 2A, the embodiment in Fig. 4 describes in detail the procedure for determining a target character among a plurality of candidate characters, and may include the following steps.

In step 401, when information of a second touch point is detected on the plurality of candidate characters, second touch point coordinates of a position where the second touch point is located are determined.

In this step, because the area occupied by each character is increased on the sub keyboard, the user can directly and more accurately tap the target character on the sub keyboard.

In step 402, the target character is determined according to the second touch point coordinates. A candidate character (on the sub keyboard) that covers a region which includes the second touch point coordinates is determined, among the plurality of candidate characters, as the target character.

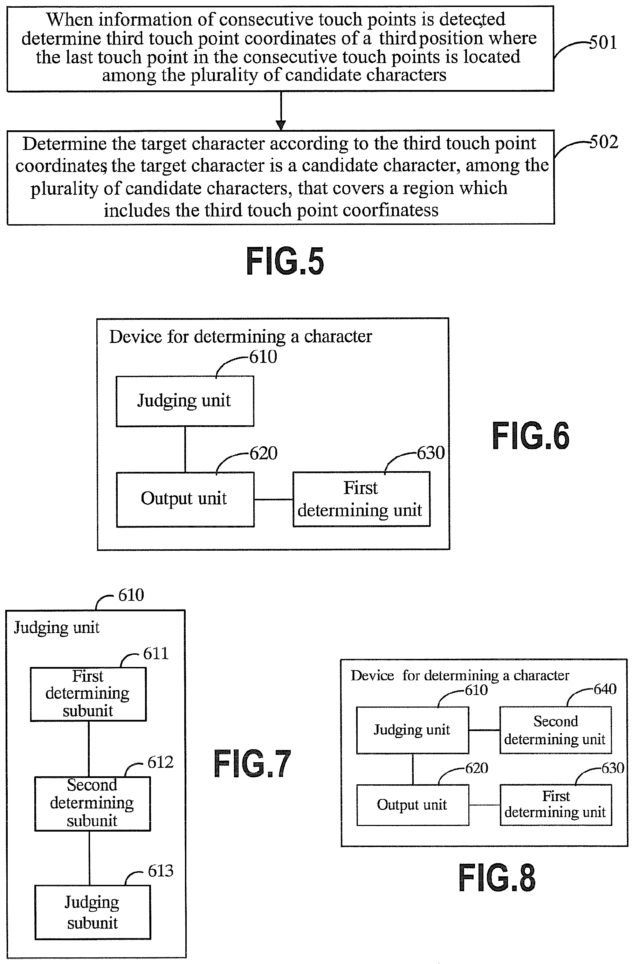

Fig. 5 is a flowchart showing another method for determining a character according to an exemplary embodiment. The method is applied in a terminal with a touch screen. On the basis of the embodiment as shown in Fig. 2A, the embodiment in Fig. 5 describes in detail the procedure for determining a target character among a plurality of candidate characters, and may include the following steps.

In step 501, when information of consecutive touch points is detected, third touch point coordinates of a position where the last touch point in the consecutive touch points is located are determined among the plurality of candidate characters.

In step 502, the target character is determined according to the third touch point coordinates. A candidate character (on the sub keyboard) that covers a region which includes the third touch point coordinates is determined, among the plurality of candidate characters, as the target character.

In the above embodiment, when information of consecutive touch points is detected by a terminal, for example, the information of consecutive touch points generated when a finger or a stylus of the user of the terminal always contacts the touch screen and slides thereon, the information of the last touch point corresponds to the information of the touch point when the user lifts the finger or stylus. A candidate character (on the sub keyboard) that covers a region which includes the third touch point coordinates is determined as the target character.

Corresponding to the above embodiments of the method for determining a character, the present disclosure also provides embodiment of a device for determining a character.

Fig. 6 is a block diagram showing a device for determining a character according to an exemplary embodiment of the present disclosure. The device includes a judging unit 610, an output unit 620 and a first determining unit 630.

The judging unit 610 is configured to, when information of a first touch point is detected on a soft keyboard, judge whether it is needed to provide a plurality of candidate characters.

The output unit 620 is configured to, when it is needed to provide a plurality of candidate characters, output the plurality of candidate characters. A first area currently occupied by each of the candidate characters is larger than a second area occupied by each of the characters on the soft keyboard.

The first determining unit 630 is configured to determine a target character among the plurality of candidate characters.

In the above embodiment, when a tap instruction tapping a soft keyboard is received, whether it is needed to provide a plurality of candidate characters is judged according to the tap instruction. When it is needed to provide a plurality of candidate characters, the plurality of candidate characters with increased areas are output. Thus, it is easy for a user to accurately select a target character among the provided plurality of candidate characters.

Fig. 7 is a block diagram showing another device for determining a character according to an exemplary embodiment of the present disclosure. On the basis of the embodiment as shown in Fig. 6, the judging unit 610 in the embodiment shown in Fig. 7 includes a first determining subunit 611, a second determining subunit 612 and a judging subunit 613.

The first determining subunit 611 is configured to, when the information of the first touch point is detected on the soft keyboard, determine first touch point coordinates of a position where the first touch point is located.

The second determining subunit 612 is configured to determine a first candidate character according to the first touch point coordinates. The first candidate character represents a soft key (of the soft keyboard) which covers a first region that includes the first touch point coordinates.

The judging subunit 613 is configured to judge whether a first distance between first center point coordinates of a center point of the first region and the first touch point coordinates exceeds a preset threshold, and when the first distance exceeds the preset threshold, determine that it is needed to provide the plurality of candidate characters.

In the above embodiment, the terminal can intelligently judge whether to provide the plurality of candidate characters according to the first touch point coordinates, and thereby user experience is improved.

Fig. 8 is a block diagram showing another device for determining a character according to an exemplary embodiment of the present disclosure. On the basis of the embodiment as shown in Fig. 7, the device in the embodiment in Fig. 8 further includes a second determining unit 640.

The second determining unit 640 is configured to, when the first distance does not exceed the preset threshold, determine the first candidate character as the target character.

In the above embodiment, when it is not needed to provide the plurality of candidate characters, the terminal automatically determines the first candidate character as the target character, and thus user experience is also improved.

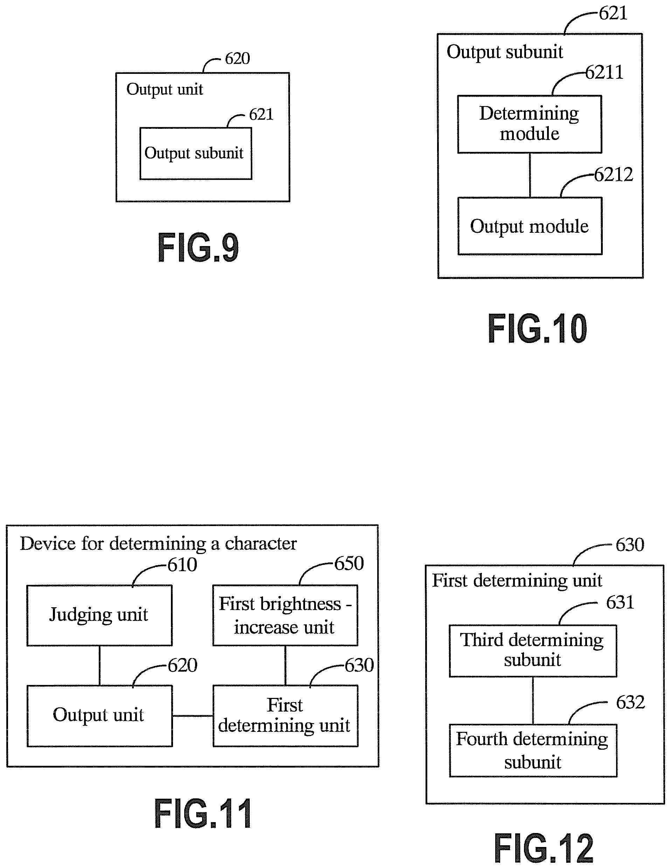

Fig. 9 is a block diagram showing another device for determining a character according to an exemplary embodiment of the present disclosure. On the basis of the embodiment as shown in Fig. 7, the output unit 620 in the embodiment in Fig. 9 includes an output subunit 621.

The output subunit 621 is configured to output the plurality of candidate characters on a provided sub keyboard.

In the above embodiment, a sub keyboard is provided over the soft keyboard, and the plurality of candidate characters are output on the sub keyboard. Because the number of the characters output on the sub keyboard is relatively small, the area occupied by each candidate character can be increased. Thus, the user may accurately select the target character on the sub keyboard.

Fig. 10 is a block diagram showing another device for determining a character according to an exemplary embodiment of the present disclosure. On the basis of the embodiment as shown in Fig. 9, the output subunit 621 in the embodiment in Fig. 10 includes a determining module 6211 and an output module 6212.

The determining module 6211 is configured to determine at least one second candidate character based on at least one second distance in an order from small to large. The second distance refers to a distance between second center point coordinates of a center point of a second region where each of the at least one second candidate character is located and the first touch point coordinates.

The output module 6212 is configured to output the first candidate character and the at least one second candidate character on the provided sub keyboard.

In the above embodiment, at least one character (i.e., at least one second candidate character) in nearest proximities with the first touch point coordinates are output on the sub keyboard in addition to the first candidate character. In the embodiment of the present disclosure, at least one second distance between second center point coordinates of a center point of a second region where each of the at least one second candidate character is located and the first touch point coordinates is calculated, and the at least one second candidate character may be selected according to at least one second distance in an order from small to large. Optionally, three characters may be sequentially selected as the second candidate characters.

Because the number of the characters provided on the sub keyboard is relatively small, the first area currently occupied by each of the candidate characters on the sub keyboard may be larger than the second area occupied by each of the characters on the soft keyboard. Thus, it is easy for the user to accurately determine the target character on the sub keyboard.

Fig. 11 is a block diagram showing another device for determining a character according to an exemplary embodiment of the present disclosure. On the basis of the embodiment as shown in Fig. 10, the device in the embodiment in Fig. 11 further includes a first brightness-increase unit 650.

The first brightness-increase unit 650 is configured to, while the first candidate character and the at least one second candidate character are output on the provided sub keyboard, increase a first brightness value of the first candidate character.

In the above embodiment, the first candidate character is a character corresponding to the information of the first touch point, and is also most likely to serve as the target character. Thus, in an embodiment of the present disclosure, while a plurality of candidate characters are output on the sub keyboard, the first brightness value of the first candidate character may be increased to highlight the first candidate character, and thereby user experience is improved.

Fig. 12 is a block diagram showing another device for determining a character according to an exemplary embodiment of the present disclosure. On the basis of the embodiment as shown in Fig. 6, the first determining unit 630 in the embodiment in Fig. 12 includes a third determining subunit 631 and a fourth determining subunit 632.

The third determining subunit 631 is configured to, when information of a second touch point is detected on the plurality of candidate characters, determine second touch point coordinates of a position where the second touch point is located.

The fourth determining subunit 632 is configured to determine the target character according to the second touch point coordinates. A candidate character (on the sub keyboard) that covers a region which includes the second touch point coordinates is determined, among the plurality of candidate characters, as the target character.

In the above embodiment, the user may directly tap the target character on the sub keyboard. Because the area occupied by each character is increased on the sub keyboard, the user can more accurately determine the target character, and thereby user experience is improved.

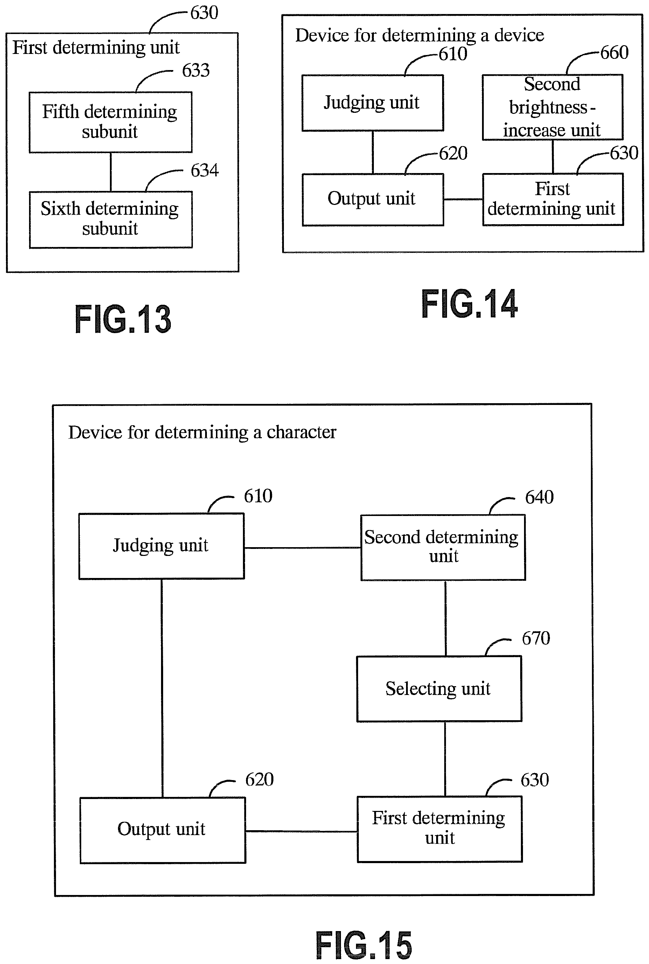

Fig. 13 is a block diagram showing another device for determining a character according to an exemplary embodiment of the present disclosure. On the basis of the embodiment as shown in Fig. 6, the first determining unit 630 in the embodiment in Fig. 13 includes a fifth determining subunit 633 and a sixth determining subunit 634.

The fifth determining subunit 633 is configured to, when information of consecutive touch points is detected, determine among the plurality of candidate characters third touch point coordinates of a position where the last touch point in the consecutive touch points is located.

The sixth determining subunit 634 is configured to determine the target character according to the third touch point coordinates. A candidate character (on the sub keyboard) that covers a region which includes the third touch point coordinates is determined, among the plurality of candidate characters, as the target character.

In the above embodiment, when information of consecutive touch points is detected by a terminal, for example, the information of consecutive touch points generated when a finger or a stylus of the user of the terminal always contacts the touch screen and slides thereon, the information of the last touch point corresponds to the information of the touch point when the user lifts the finger or stylus. A candidate character (on the sub keyboard) that covers a region which includes the third touch point coordinates is determined as the target character. Thus, user experience is improved.

Fig. 14 is a block diagram showing another device for determining a character according to an exemplary embodiment of the present disclosure. On the basis of the embodiment as shown in Fig. 13, the device in the embodiment in Fig. 14 further includes a second brightness-increase unit 660.

The second brightness-increase unit 660 is configured to, among the plurality of candidate characters, increase a second brightness value of a character corresponding to information of a current touch point in the consecutive touch points.

In the above embodiment, in order to make the user more accurately judge whether the current character corresponding to the touch operation is the target character, before receiving the ending instruction, the current character is highlighted by increasing the second brightness value of the current character, and thereby user experience is also improved.

Fig. 15 is a block diagram showing another device for determining a character according to an exemplary embodiment of the present disclosure. On the basis of any one of the embodiments as shown in Figs. 6 to 14, the device in the embodiment in Fig. 15 further includes a selecting unit 670.

The selecting unit 670 is configured to select the target character on the soft keyboard.

For realizing of functions and roles of respective units in the above devices, refer to the above description regarding corresponding steps in the methods, and detailed descriptions are omitted.

The embodiments of devices basically correspond to the embodiments of methods, and thus for related portions, the description about the embodiments of methods may be referred to. The above described embodiments of devices are only illustrative, and portions described as separated units may be or may not be physically separated, and the portions shown as respective units may be or may not be physical modules, i.e., the portions may be located at one place, or may be distributed over a plurality of network modules. A part or whole of the units may be selected to realize the objects of the technical solutions of the present disclosure according to actual requirements. One of ordinary skill in this art may understand and practice the technical solutions of the present disclosure without creative work.

Correspondingly, the present disclosure further provides a device for determining a character. The device includes: a processor; and a memory for storing instructions executable by the processor.

The processor is configured to perform:
when detecting information of a first touch point on a soft keyboard, judging whether it is needed to provide a plurality of candidate characters;
when it is needed to provide a plurality of candidate characters, outputting the plurality of candidate characters, wherein a first area currently occupied by each of the candidate characters is larger than a second area occupied by each of the characters on the soft keyboard; and
determining a target character among the plurality of candidate characters.

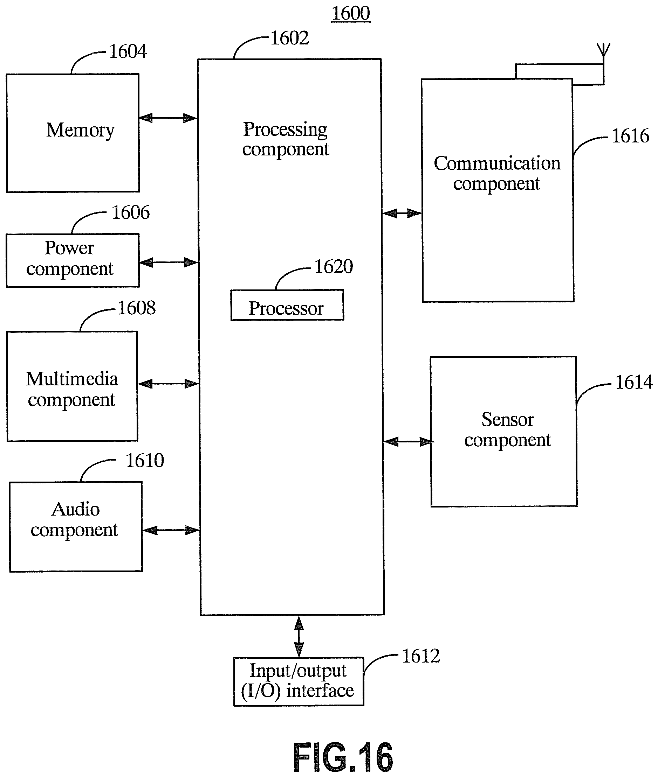

Fig. 16 is a block diagram showing a structure of a device 1600 for determining a character according to an exemplary embodiment of the present disclosure. For example, the device 1600 may be a terminal with a touch screen, the terminal may be a mobile phone, a computer, a digital broadcast terminal, a messaging device, a smart socket, a smart sphygmomanometer, a gaming console, a tablet, a medical device, exercise equipment, a personal digital assistant, and the like.

Referring to Fig. 16, the device 1600 may include one or more of the following components: a processing component 1602, a memory 1604, a power component 1606, a multimedia component 1608, an audio component 1610, an input/output (I/O) interface 1612, a sensor component 1614, and a communication component 1616.

The processing component 1602 typically controls overall operations of the device 1600, such as the operations associated with display, telephone calls, data communications, camera operations, and recording operations. The processing component 1602 may include one or more processors 1620 to execute instructions to perform all or part of the steps in the above described methods. Moreover, the processing component 1602 may include one or more modules which facilitate the interaction between the processing component 1602 and other components. For instance, the processing component 1602 may include a multimedia module to facilitate the interaction between the multimedia component 1608 and the processing component 1602.

The memory 1604 is configured to store various types of data to support the operation of the device 1600. Examples of such data include instructions for any applications or methods operated on the device 1600, contact data, phonebook data, messages, pictures, video, etc. The memory 1604 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1606 provides power to various components of the device 1600. The power component 1606 may include a power management system, one or more power sources, and any other components associated with the generation, management, and distribution of power in the device 1600.

The multimedia component 1608 includes a screen providing an output interface between the device 1600 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 1608 includes a front camera and/or a rear camera. The front camera and the rear camera may receive an external multimedia datum while the device 1600 is in an operation mode, such as a photographing mode or a video mode. Each of the front camera and the rear camera may be a fixed optical lens system or have focus and optical zoom capability.

The audio component 1610 is configured to output and/or input audio signals. For example, the audio component 1610 includes a microphone ("MIC") configured to receive an external audio signal when the device 1600 is in an operation mode, such as a call mode, a recording mode, and a voice recognition mode. The received audio signal may be further stored in the memory 1604 or transmitted via the communication component 1616. In some embodiments, the audio component 1610 further includes a speaker to output audio signals.

The I/O interface 1612 provides an interface between the processing component 1602 and peripheral interface modules, such as a keyboard, a click wheel, buttons, and the like. The buttons may include, but are not limited to, a home button, a volume button, a starting button, and a locking button.

The sensor component 1614 includes one or more sensors to provide status assessments of various aspects of the device 1600. For instance, the sensor component 1614 may detect an open/closed status of the device 1600, relative positioning of components, e.g., the display and the keypad, of the device 1600, a change in position of the device 1600 or a component of the device 1600, a presence or absence of user contact with the device 1600, an orientation or an acceleration/deceleration of the device 1600, and a change in temperature of the device 1600. The sensor component 1614 may include a proximity sensor configured to detect the presence of nearby objects without any physical contact. The sensor component 1614 may also include a light sensor, such as a CMOS or CCD image sensor, for use in imaging applications. In some embodiments, the sensor component 1614 may also include an accelerometer sensor, a gyroscope sensor, a magnetic sensor, a pressure sensor, a microwave sensor, or a temperature sensor.

The communication component 1616 is configured to facilitate communication, wired or wirelessly, between the device 1600 and other devices. The device 1600 can access a wireless network based on a communication standard, such as WiFi, 2G, or 3G, or a combination thereof. In one exemplary embodiment, the communication component 1616 receives a broadcast signal or broadcast associated information from an external broadcast management system via a broadcast channel. In one exemplary embodiment, the communication component 1616 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 1600 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 1604, executable by the processor 1620 in the device 1600, for performing the above-described methods. For example, the non-transitory computer-readable storage medium may be a ROM, a RAM, a CD-ROM, a magnetic tape, a floppy disc, an optical data storage device, and the like.

Where functional modules are referred to in apparatus embodiments for carrying out various steps of the described method(s) it will be understood that these modules may be implemented in hardware, in software, or a combination of the two. When implemented in hardware, the modules may be implemented as one or more hardware modules, such as one or more application specific integrated circuits. When implemented in software, the modules may be implemented as one or more computer programs that are executed on one or more processors.

## Claims

1. A method for determining a character, applied in a terminal with a touch screen, wherein the method comprises steps of :
when detecting information of a first touch point on a soft keyboard, judging (101) whether it is needed to provide a plurality of candidate characters;
if it is needed to provide a plurality of candidate characters, outputting (102) the plurality of candidate characters, wherein a first area currently occupied by each of the candidate characters is larger than a second area occupied by each of the characters on the soft keyboard; and
determining (103) a target character among the plurality of candidate characters;
wherein the step of judging (101) whether it is needed to provide a plurality of candidate characters comprises steps of :
when detecting the information of the first touch point on the soft keyboard, determining (201) first touch point coordinates of a position where the first touch point is located; and
determining (202) a first candidate character according to the first touch point coordinates, wherein the first candidate character represents a soft key which covers a first region that includes the first touch point coordinates;
**characterized in that** the method further comprises steps of:
judging (203) whether a first distance between first center point coordinates of a center point of the first region and the first touch point coordinates exceeds a preset threshold, and if the first distance exceeds the preset threshold, determining that it is needed to provide the plurality of candidate characters.

2. The method according to claim 1, further comprising a step of:
if the first distance does not exceed the preset threshold, determining (204) the first candidate character as the target character.

3. The method according to any one of claims 1 to 2, the step of outputting (102) the plurality of candidate characters, comprises a step of :
outputting (206) the plurality of candidate characters on a provided sub keyboard.

4. The method according to claim 3, wherein the step of outputting (206) the plurality of candidate characters on a provided sub keyboard comprises steps of:
determining (301) at least one second candidate character based on at least one second distance in an order from small to large, wherein the second distance is a distance between second center point coordinates of a center point of a second region where each of the at least one second candidate character is located and the first touch point coordinates; and
outputting (302) the first candidate character and the at least one second candidate character on the provided sub keyboard.

5. The method according to claim 4, further comprising a step of:
while outputting the first candidate character and the at least one second candidate character on the provided sub keyboard, increasing a first brightness value of the first candidate character.

6. The method according to any one of claims 1, 4 to 5, wherein the step of determining (103) a target character among the plurality of candidate characters comprises steps of :
when detecting information of a second touch point on the plurality of candidate characters, determining (401) second touch point coordinates of a position where the second touch point is located; and
determining (402) the target character according to the second touch point coordinates, wherein the target character is a candidate character, among the plurality of candidate characters, that covers a region which includes the second touch point coordinates.

7. The method according to any one of claims 1, 4 to 6, wherein the step of determining (103) a target character among the plurality of candidate characters comprises steps of :
when detecting information of consecutive touch points, determining (501), among the plurality of candidate characters, third touch point coordinates of a position where the last touch point in the consecutive touch points is located; and
determining (502) the target character according to the third touch point coordinates, wherein the target character is a candidate character, among the plurality of candidate characters, that covers a region which includes the third touch point coordinates.

8. The method according to claim 7, further comprising a step of:
among the plurality of candidate characters, increasing a second brightness value of a character corresponding to information of a current touch point in the consecutive touch points.

9. The method according to any one of claims 1, 4 to 8, wherein after the step of determining (103) the target character among the plurality of candidate characters, the method further comprises a step of :
selecting the target character on the soft keyboard.

10. A device for determining a character, applied in a terminal with a touch screen, wherein the device comprises:
a judging unit (610) configured to, when information of a first touch point is detected on a soft keyboard, judge whether it is needed to provide a plurality of candidate characters;
an output unit (620) configured to, if it is needed to provide a plurality of candidate characters, output the plurality of candidate characters, wherein a first area currently occupied by each of the candidate characters is larger than a second area occupied by each of the characters on the soft keyboard; and
a first determining unit (630) configured to determine a target character among the plurality of candidate characters;
wherein the judging unit (610) comprises:
a first determining subunit (611) configured to, when the information of the first touch point is detected on the soft keyboard, determine first touch point coordinates of a position where the first touch point is located; and
a second determining subunit (612) configured to determine a first candidate character according to the first touch point coordinates, wherein the first candidate character represents a soft key which covers a first region that includes the first touch point coordinates;
**characterized in that** the judging unit (610) further comprises:
a judging subunit (613) configured to judge whether a first distance between first center point coordinates of a center point of the first region and the first touch point coordinates exceeds a preset threshold, and if the first distance exceeds the preset threshold, determine that it is needed to provide the plurality of candidate characters.

11. The device according to claim 10, further comprising:
a second determining unit (640) configured to, if the first distance does not exceed the preset threshold, determine the first candidate character as the target character.

12. A computer program including instructions for executing the steps of the method for determining a character according to any one of claims 1 to 9, when said program is executed by a computer.

13. A recording medium readable by a computer and having recorded thereon the computer program according to claim 12.

## Patentansprüche

1. Verfahren zur Bestimmung eines Zeichens, das in einem Terminal mit einem Berührungsbildschirm angewendet wird, wobei das Verfahren die Schritte umfasst:
wenn Informationen eines ersten Berührungspunkts auf einer Soft-Tastatur erfasst werden, Beurteilen (101), ob es erforderlich ist, eine Vielzahl von in Frage kommenden Zeichen bereitzustellen,
wenn es erforderlich ist, eine Vielzahl von in Frage kommenden Zeichen bereitzustellen, Ausgeben (102) der Vielzahl von in Frage kommenden Zeichen, wobei ein erster Bereich, der aktuell von jedem der in Frage kommenden Zeichen belegt ist, größer ist als ein zweiter Bereich, der von jedem der Zeichen auf der Soft-Tastatur belegt ist, und
Bestimmen (103) eines Zielzeichens aus der Vielzahl von in Frage kommenden Zeichen,
wobei der Schritt des Beurteilens (101), ob es erforderlich ist, eine Vielzahl von in Frage kommenden Zeichen bereitzustellen, die Schritte umfasst:
wenn Informationen des ersten Berührungspunkts auf der Soft-Tastatur erfasst werden, Bestimmen (201) von Koordinaten des ersten Berührungspunkts einer Position, an der sich der erste Berührungspunkt befindet, und
Bestimmen (202) eines ersten in Frage kommenden Zeichens in Übereinstimmung mit den Koordinaten des ersten Berührungspunkts, wobei das erste in Frage kommende Zeichen eine Soft-Taste darstellt, die eine erste Region bedeckt, die die Koordinaten des ersten Berührungspunkts beinhaltet,
**dadurch gekennzeichnet, dass** das Verfahren ferner die Schritte umfasst:
Beurteilen (203), ob ein erster Abstand zwischen ersten Mittelpunktkoordinaten eines Mittelpunkts der ersten Region und den Koordinaten des ersten Berührungspunkts eine voreingestellte Schwelle überschreitet, und wenn der erste Abstand die voreingestellte Schwelle überschreitet, Bestimmen, dass es erforderlich ist, die Vielzahl von in Frage kommenden Zeichen bereitzustellen.

2. Verfahren nach Anspruch 1, ferner umfassend den Schritt:
wenn der erste Abstand die voreingestellte Schwelle nicht überschreitet, Bestimmen (204) des ersten in Frage kommenden Zeichens als Zielzeichen.

3. Verfahren nach einem der Ansprüche 1 bis 2, wobei der Schritt des Ausgebens (102) der Vielzahl von in Frage kommenden Zeichen den Schritt umfasst:
Ausgeben (206) der Vielzahl von in Frage kommenden Zeichen auf einer bereitgestellten Teiltastatur.

4. Verfahren nach Anspruch 3, wobei der Schritt des Ausgebens (206) der Vielzahl von in Frage kommenden Zeichen auf einer bereitgestellten Teiltastatur die Schritte umfasst:
Bestimmen (301) zumindest eines zweiten in Frage kommenden Zeichens auf Grundlage zumindest eines zweiten Abstands in aufsteigender Reihenfolge, wobei der zweite Abstand ein Abstand zwischen zweiten Mittelpunktkoordinaten eines Mittelpunkts einer zweiten Region, wo sich jeder der zumindest einen zweiten in Frage kommenden Zeichen befindet, und den Koordinaten des ersten Berührungspunkts ist, und
Ausgeben (302) des ersten in Frage kommenden Zeichens und des zumindest einen zweiten in Frage kommenden Zeichens auf der bereitgestellten Teiltastatur.

5. Verfahren nach Anspruch 4, ferner umfassend den Schritt:
während des Ausgebens des ersten in Frage kommenden Zeichens und des zumindest einen zweiten in Frage kommenden Zeichens auf der bereitgestellten Teiltastatur, Erhöhen eines ersten Helligkeitswerts des ersten in Frage kommenden Zeichens.

6. Verfahren nach einem der Ansprüche 1, 4 bis 5, wobei der Schritt des
Bestimmens (103) eines Zielzeichens aus der Vielzahl von in Frage kommenden Zeichen die Schritte umfasst:
wenn die Informationen eines zweiten Berührungspunkts auf der Vielzahl von in Frage kommenden Zeichen erfasst werden, des Bestimmens (401) von Koordinaten des zweiten Berührungspunkts einer Position, an der sich der zweite Berührungspunkt befindet, und
Bestimmen (402) des Zielzeichens in Übereinstimmung mit den Koordinaten des zweiten Berührungspunkts, wobei das Zielzeichen ein in Frage kommendes Zeichen aus der Vielzahl von in Frage kommenden Zeichen ist, das eine Region bedeckt, die die Koordinaten des zweiten Berührungspunkts beinhaltet.

7. Verfahren nach einem der Ansprüche 1, 4 bis 6, wobei der Schritt des Bestimmens (103) eines Zielzeichens aus der Vielzahl von in Frage kommenden Zeichen die Schritte umfasst:
wenn Informationen aufeinander folgender Berührungspunkte erfasst werden, Bestimmen (501), aus der Vielzahl von in Frage kommenden Zeichen, von Koordinaten eines dritten Berührungspunkts einer Position, an der sich der letzte Berührungspunkt in den aufeinander folgenden Berührungspunkten befindet, und
Bestimmen (502) des Zielzeichens in Übereinstimmung mit den Koordinaten des dritten Berührungspunkts, wobei das Zielzeichen ein in Frage kommendes Zeichen aus der Vielzahl von in Frage kommenden Zeichen ist, das eine Region bedeckt, die die Koordinaten des dritten Berührungspunkts beinhaltet.

8. Verfahren nach Anspruch 7, ferner umfassend den Schritt:
Erhöhen eines zweiten Helligkeitswerts eines Zeichens aus der Vielzahl von in Frage kommenden Zeichen entsprechend den Informationen eines aktuellen Berührungspunkts in den aufeinander folgenden Berührungspunkten.

9. Verfahren nach einem der Ansprüche 1, 4 bis 8, wobei das Verfahren nach dem Schritt des Bestimmens (103) des Zielzeichens aus der Vielzahl von in Frage kommenden Zeichen ferner den Schritt umfasst:
Auswählen des Zielzeichens auf der Soft-Tastatur.

10. Vorrichtung zur Bestimmung eines Zeichens, das in einem Terminal mit einem Berührungsbildschirm angewendet wird, wobei die Vorrichtung umfasst:
eine Beurteilungseinheit (610), die dazu ausgestaltet ist, zu beurteilen, ob es erforderlich ist, eine Vielzahl von in Frage kommenden Zeichen bereitzustellen, wenn Informationen eines ersten Berührungspunkts auf einer Soft-Tastatur erfasst werden,
eine Ausgabeeinheit (620), die dazu ausgestaltet ist, wenn es erforderlich ist, eine Vielzahl von in Frage kommenden Zeichen bereitzustellen, die Vielzahl von in Frage kommenden Zeichen auszugeben, wobei ein erster Bereich, der aktuell von jedem der in Frage kommenden Zeichen belegt ist, größer ist als ein zweiter Bereich, der von jedem der Zeichen auf der Soft-Tastatur belegt ist, und
eine erste Bestimmungseinheit (630), die dazu ausgestaltet ist, ein Zielzeichen aus der Vielzahl von in Frage kommenden Zeichen zu bestimmen,
wobei die Beurteilungseinheit (610) umfasst:
eine erste Bestimmungs-Teileinheit (611), die dazu ausgestaltet ist, wenn die Informationen des ersten Berührungspunkts auf der Soft-Tastatur erfasst werden, Koordinaten des ersten Berührungspunkts einer Position zu bestimmen, wo der erste Berührungspunkt sich befindet, und
eine zweite Bestimmungs-Teileinheit (612), die dazu ausgestaltet ist, ein erstes in Frage kommendes Zeichen in Übereinstimmung mit den Koordinaten des ersten Berührungspunkts zu bestimmen, wobei das erste in Frage kommende Zeichen eine Soft-Taste darstellt, die eine erste Region bedeckt, die die Koordinaten des ersten Berührungspunkts beinhaltet,
**dadurch gekennzeichnet, dass** die Beurteilungseinheit (610) ferner umfasst:
eine Beurteilungs-Teileinheit (613), die dazu ausgestaltet ist, zu beurteilen, ob ein erster Abstand zwischen ersten Mittelpunktkoordinaten eines Mittelpunkts der ersten Region und den Koordinaten des ersten Berührungspunkts eine voreingestellte Schwelle überschreitet, und wenn der erste Abstand die voreingestellte Schwelle überschreitet, zu bestimmen, dass es erforderlich ist, die Vielzahl von in Frage kommenden Zeichen bereitzustellen.

11. Vorrichtung nach Anspruch 10, ferner umfassend:
eine zweite Bestimmungseinheit (640), die dazu ausgestaltet ist, wenn der erste Abstand die voreingestellte Schwelle nicht überschreitet, das erste in Frage kommende Zeichen als Zielzeichen zu bestimmen.

12. Computerprogramm mit Anweisungen zum Ausführen der Schritte des Verfahrens zum Bestimmen eines Zeichens nach einem der Ansprüche 1 bis 9, wenn das Programm durch einen Computer ausgeführt wird.

13. Durch einen Computer lesbares Speichermedium, auf dem das Computerprogramm nach Anspruch 12 gespeichert ist.

## Revendications

1. Procédé de détermination d'un caractère, appliqué dans un terminal avec un écran tactile, dans lequel le procédé comprend des étapes de :
lors d'une détection d'une information d'un premier point de contact sur un clavier programmable, fait d'évaluer (101) s'il est nécessaire de fournir une pluralité de caractères candidats ;
s'il est nécessaire de fournir une pluralité de caractères candidats, sortie (102) de la pluralité de caractères candidats, dans lequel une première zone actuellement occupée par chacun des caractères candidats est plus grande qu'une seconde zone occupée par chacun des caractères sur le clavier programmable ; et
détermination (103) d'un caractère cible parmi la pluralité de caractères candidats ;
dans lequel l'étape du fait d'évaluer (101) s'il est nécessaire de fournir une pluralité de caractères candidats comprend des étapes de :
lors d'une détection de l'information du premier point de contact sur le clavier programmable, détermination (201) de coordonnées de premier point de contact d'une position où le premier point de contact est situé ; et
détermination (202) d'un premier caractère candidat en fonction des coordonnées de premier point de contact, dans lequel le premier caractère candidat représente une touche programmable qui couvre une première région qui inclut les coordonnées de premier point de contact ;
**caractérisé en ce que** le procédé comprend en outre des étapes de :
fait d'évaluer (203) si une première distance entre des premières coordonnées de point central d'un point central de la première région et les coordonnées de premier point de contact dépasse un seuil préétabli, et si la première distance dépasse le seuil préétabli, fait de déterminer qu'il est nécessaire de fournir la pluralité de caractères candidats.

2. Procédé selon la revendication 1, comprenant en outre une étape de :
si la première distance ne dépasse pas le seuil préétabli, détermination (204) du premier caractère candidat en tant que caractère cible.

3. Procédé selon l'une quelconque des revendications 1 à 2, l'étape de sortie (102) de la pluralité de caractères candidats, comprend une étape de :
sortie (206) de la pluralité de caractères candidats sur un sous-clavier fourni.

4. Procédé selon la revendication 3, dans lequel l'étape de sortie (206) de la pluralité de caractères candidats sur un sous-clavier fourni comprend des étapes de :
détermination (301) d'au moins un deuxième caractère candidat sur la base d'au moins une deuxième distance dans un ordre allant de petit à grand, dans lequel la deuxième distance est une distance entre des deuxièmes coordonnées de point central d'un point central d'une deuxième région où chacun des au moins un deuxième caractère candidat est situé et les coordonnées de premier point de contact ; et
sortie (302) du premier caractère candidat et du au moins un deuxième caractère candidat sur le sous-clavier fourni.

5. Procédé selon la revendication 4, comprenant en outre une étape de :
pendant une sortie du premier caractère candidat et du au moins un deuxième caractère candidat sur le sous-clavier fourni, augmentation d'une première valeur de luminosité du premier caractère candidat.

6. Procédé selon l'une quelconque des revendications 1, 4 à 5, dans lequel l'étape de détermination (103) d'un caractère cible parmi la pluralité de caractères candidats comprend des étapes de :
lors d'une détection d'une information d'un deuxième point de contact sur la pluralité de caractères candidats, détermination (401) de coordonnées de deuxième point de contact d'une position où le deuxième point de contact est situé ; et
détermination (402) du caractère cible en fonction des coordonnées de deuxième point de contact, dans lequel le caractère cible est un caractère candidat, parmi la pluralité de caractères candidats, qui couvre une région qui inclut les coordonnées de deuxième point de contact.

7. Procédé selon l'une quelconque des revendications 1, 4 à 6, dans lequel l'étape de détermination (103) d'un caractère cible parmi la pluralité de caractères candidats comprend des étapes de :
lors d'une détection d'une information de points de contact consécutifs, détermination (501), parmi la pluralité de caractères candidats, de coordonnées de troisième point de contact d'une position où le dernier point de contact dans les points de contact consécutifs est situé ; et
détermination (502) du caractère cible en fonction des coordonnées de troisième point de contact, dans lequel le caractère cible est un caractère candidat, parmi la pluralité de caractères candidats, qui couvre une région qui inclut les coordonnées de troisième point de contact.

8. Procédé selon la revendication 7, comprenant en outre une étape de :
parmi la pluralité de caractères candidats, augmentation d'une seconde valeur de luminosité d'un caractère correspondant à une information d'un point de contact en cours dans les points de contact consécutifs.

9. Procédé selon l'une quelconque des revendications 1, 4 à 8, dans lequel après l'étape de détermination (103) du caractère cible parmi la pluralité de caractères candidats, le procédé comprend en outre une étape de :
sélection du caractère cible sur le clavier programmable.

10. Dispositif de détermination d'un caractère, appliqué dans un terminal avec un écran tactile, dans lequel le dispositif comprend :
une unité d'évaluation (610) configurée pour, lorsqu'une information d'un premier point de contact est détectée sur un clavier programmable, évaluer s'il est nécessaire de fournir une pluralité de caractères candidats ;
une unité de sortie (620) configurée pour, s'il est nécessaire de fournir une pluralité de caractères candidats, sortir la pluralité de caractères candidats, dans lequel une première zone actuellement occupée par chacun des caractères candidats est plus grande qu'une seconde zone occupée par chacun des caractères sur le clavier programmable ; et
une première unité de détermination (630) configurée pour déterminer un caractère cible parmi la pluralité de caractères candidats ;
dans lequel l'unité d'évaluation (610) comprend :
une première sous-unité de détermination (611) configurée pour, lorsque l'information du premier point de contact est détectée sur le clavier programmable, déterminer des coordonnées de premier point de contact d'une position où le premier point de contact est situé ; et
une seconde sous-unité de détermination (612) configurée pour déterminer un premier caractère candidat en fonction des coordonnées de premier point de contact, dans lequel le premier caractère candidat représente une touche programmable qui couvre une première région qui inclut les coordonnées de premier point de contact ;
**caractérisé en ce que** l'unité d'évaluation (610) comprend en outre :
une unité d'évaluation (613) configurée pour évaluer si une première distance entre des premières coordonnées de point central d'un point central de la première région et les coordonnées de premier point de contact dépasse un seuil préétabli, et si la première distance dépasse le seuil préétabli, déterminer qu'il est nécessaire de fournir la pluralité de caractères candidats.

11. Dispositif selon la revendication 10, comprenant en outre :
une seconde unité de détermination (640) configurée pour, si la première distance ne dépasse pas le seuil préétabli, déterminer le premier caractère candidat en tant que caractère cible.

12. Programme d'ordinateur incluant des instructions pour exécuter les étapes du procédé de détermination d'un caractère selon l'une quelconque des revendications 1 à 9, lorsque ledit programme est exécuté par un ordinateur.

13. Support d'enregistrement lisible par un ordinateur et présentant enregistré sur lui le programme d'ordinateur selon la revendication 12.
